Europäisches Patentamt

(19) European Patent Office

Office européen des brevets

(11) Publication number: **0 224 649**
B1

# EUROPEAN PATENT SPECIFICATION

(45) Date of publication of the patent specification: 20.06.90

(21) Application number: 86111058.3

(22) Date of filing: 20.07.82

(60) Publication number of the earlier application in accordance with Art. 76 EPC: 0072924

(51) Int. Cl.⁵: **B65D 41/34**, B65D 55/02, B29C 67/00

(54) A plastic closure for a container.

(30) Priority: 24.07.81 US 286375

(43) Date of publication of application:
10.06.87 Bulletin 87/24

(45) Publication of the grant of the patent:
20.06.90 Bulletin 90/25

(84) Designated Contracting States:
DE FR IT NL SE

(56) References cited:
EP-A- 0 026 405
DE-A- 2 638 351
FR-A- 2 454 977
GB-A- 2 033 350
US-A- 3 329 295
US-A- 3 415 403

(73) Proprietor: H-C Industries, Inc., P.O. Box 472 100 West Harrison Street, Crawfordsville Indiana 47933(US)

(72) Inventor: Wilde, Sheldon L., 1309 Durham Drive, Crawfordsville Indiana 47933(US)
Inventor: McCandless, Thomas J., R.R. No. 6, Crawfordsville Indiana 47933(US)

(74) Representative: Strehl, Schübel-Hopf, Groening, Maximilianstrasse 54 Postfach 22 14 55, D-8000 München 22(DE)

## Description

The present invention relates to a plastics closure for a container and a method for its manufacture in accordance with the introductory portion of claims 1 and 4. A plastics closure of this kind is known from US-A 3 415 403.

The collar or pilfer band of this known closure is separated from the skirt by a horizontal groove which permits said pilfer band to be severed from the cap by cutting with a knife along said groove. Alternatively, said pilfer band may be jointed to the skirt by perforations for facilitating separation thereof. Said groove may also be moulded more deeply in order to allow separation of cap and pilfer band without use of a knife. If said groove is moulded sufficiently deeply, the relatively thin layer of plastic between the cap pilfer band will crack if sufficient torque is applied to the cap in a counterclockwise direction. The neck of the container has moulded thereon a plurality of lugs. Each lug has a tooth-engaging face adapted to matingly engage the corresponding face of a ratchet tooth to prevent movement of the collar in a counterclockwise direction. Each lug is chamfered so that it is wider at the top than at the bottom. The difference in width of chamfer provides a diminishing flexing action of the lug as the closure is threaded onto the neck. When a cap and pilfer band are progressively drawn downwardly onto the neck of the container by the threading operation, the ratchet teeth of the pilfer band are gradually revolved down and around said lugs. As the teeth contact the lugs, the lugs flex inwardly, and, due to their inherent resiliency, snap back outwardly. As the teeth approach the thicker portion of each lug, (i.e.the portion where chamfer is smallest), said lugs become more resistent to flexing and finally reach a point where the closure is locked in position, since the engagement of corresponding faces precludes counterrotation of the closure with respect to the container body. At this point top wall structure of the cap engages the upper surface of the container neck thereby effectively sealing the container. To remove the closure, the pilfer band is severed from the cap by drawing a knife around the circumference of said groove or, alternatively, if the groove is sufficiently deep, separation may be effected by twisting the cap sharply in a counterclockwise direction to crack the plastic in said groove.

A connector portion, which operates to retain a connection between the skirt and the pilfer band, after the frangible ribs are fractured is known from FR-A 2 454 977 which relates to a closure with a pilfer band.

The provision of an actual line of weakening is known from GB-A 2 033 350 which likewise relates to a closure with a pilfer band.

Because the application of closures to containers is preferably performed on a high-speed production line, it is desirable that application be possible with the fewest number of production steps. Heretofore, the pilfer band arrangements for some plastic closures has required one or more specific production processes for properly associating the pilfer band arrangement with the locking ring or other retaining means provided on the neck of the container.

Thus, the development of an effective, self-engaging pilfer band for a plastic closure which would be suitable for application to bottles or other like containers without the use of specialized production equipment would significantly enhance the desirability of plastic closures for use in a high-speed bottling operation.

The present invention achieves this improvement of the plastic closure according to the introductory portion of claim 1 by the features in the characterizing portion of claim 1.

According to a further improvement, the plastics closure of the invention can be characterized by a connector portion which operates to retain a connection between the skirt and the pilfer band after the frangible bridges are fractured and which is not traversed by said score line.

Moreover, an actual line of weakening extending across the pilfer band at one circumferential end of the connector portion can be provided.

The invention relates also to a method of making a closure comprising moulding from a plastics material, said closure having a top wall, a cylindrical skirt which depends from said top wall and which has a screw-thread on its internal surface, a pilfer band depending from said skirt and connected thereto by a plurality of circumferentially-spaced bridges, and a circumferential line of weakening defining the boundary between the skirt and the pilfer band characterized by forming in the moulding of the closure a plurality of circumferentially-spaced ribs projecting radially inwardly from the internal surfaces of the skirt and the pilfer band extending axially between the internal surface of the skirt and pilfer band, and subsequently scoring a circumferential line between the skirt and the pilfer band from the radially outer side of the closure which score line extends circumferentially past the ribs whereby the score line constitutes the circumferential line of weakening and the ribs constitute the frangible bridges. This method can further be improved by a connector portion being provided between the skirt and the pilfer band wherein the score line extends continuously from one circumferential end of the connector portion to the other without traversing the connector portion.

In case that a connector portion is provided between the skirt and the pilfer band the score line can extend continuously from one circumferential end of the connector portion to the other without traversing the connector portion.

As the closure is rotated for removal from the container, the above locking interaction of the pilfer band with the container neck resists the torque applied to the closure, and thus creates shear forces within the closure. When these shear forces reach a magnitude which is sufficiently great, the peripheral weakened skirt portion of the closure fractures, thus providing a clear indication that the closure has been removed, or partially removed, from the container.

## Brief Description of the Drawings

FIGURE 1 is a cross-sectional elevational view of a plastic closure in accordance with the present invention applied to a bottle or like container;

FIGURE 2 is a perspective view looking into the plastic closure of Figure 1;

FIGURE 3 is a fragmentary perspective view taken along lines 3-3 of Figure 2;

FIGURE 4 is a view taken along lines 4-4 of Figure 1;

FIGURE 5 is a fragmentary view similar to Figure 4 illustrating the closure of Figure 1 during application to the container;

FIGURE 6 is a view similar to Figure 5 illustrating the closure of Figure 1 during removal of the closure from the container;

FIGURE 7 is a fragmentary perspective view further illustrating the closure of Figure 1; and

FIGURE 8 is a perspective view illustrating removal of the closure illustrated in Figure 1 from a container.

## Detailed Description

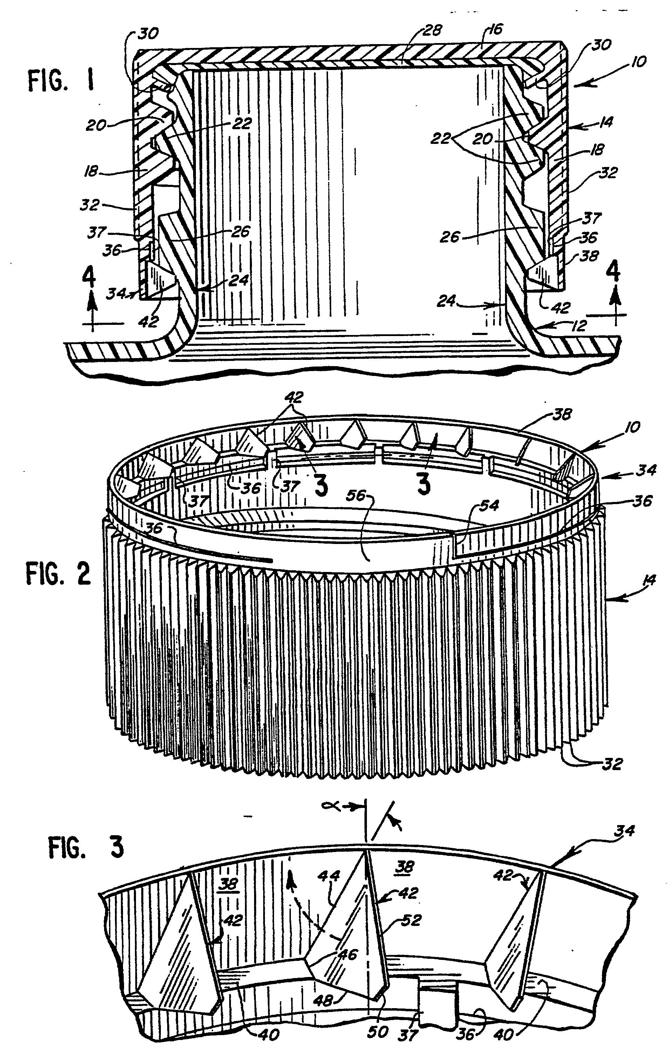

With reference now to Figure 1, therein is illustrated a molded plastic closure 10 in accordance with the preferred embodiment of the present invention. Closure 10 is shown applied to a bottle or like container 12. Closure 10 may be fabricated from any of a variety of plastic materials, such as polypropylene or polyethylene.

Closure 10 includes a cap 14 (sometimes referred to as a shell) which includes a generally circular top wall portion 16 and a generally cylindrical skirt portion 18 depending from and integral with top wall portion 16. Skirt portion 18 includes internal threads 20 which are adapted to mate with and engage external container neck threads 22 which are formed integrally with container neck 24. Container neck 24 includes a peripherally extending, continuous annular bead portion or locking ring 26 disposed beneath neck threads 22.

Plastic closure 10 includes a plastic liner 28 positioned adjacent to top wall portion 16. Cap 14 includes an annular liner-retaining lip 30 which extends inwardly of the cap and aids in retention of plastic liner 28. As shown in Figure 1, plastic liner 28 is adapted to be brought into and maintained in sealing engagement with the side of the mouth of the container defined by the top of container neck 24. However, a closure in accordance with the present invention may be provided with a sealing arrangement other than side sealing liner 28 shown. Skirt portion 18 of cap 14 includes a plurality of circumferentially spaced, vertically extending external ribs 32 which facilitate gripping of closure 10.

In accordance with the present invention, an integral pilfer band 34 is provided adjacent to skirt portion 18, as shown in Figures 1 and 2. Pilfer band 34 preferably is formed integrally with the closure 10 during its formation, and extends continuously about the closure and defines the lower edge thereof.

Pilfer band 34 is distinguished from skirt portion 18 of cap 14 by a peripheral, fracturable weakened skirt portion. Preferably, this weakened skirt portion comprises a plurality of circumferentially spaced, integrally molded frangible bridges or ribs 37 which extend between the inside surfaces of pilfer band 34 and skirt portion 18. The fracturable skirt portion further comprises a score line 36 which extends peripherally of the closure for creating an area of reduced strength between pilfer band 34 and skirt portion 18. Score line 36 is preferably formed so that pilfer band 34 is substantially severed and detached from skirt portion 18 except for frangible ribs 37. Depending upon the desired strength of each rib 37, the cutting edge used to form score line 36 may also be used to simultaneously score or partially cut some or all of ribs 37.

Ribs 37 provide an integral connection between pilfer band 34 and skirt portion 18 which is sufficiently strong to accommodate application of closure 10 to container 12 without failure. However, during rotation for removal of the closure from the container, pilfer band 34 resists the rotation and thus shear forces are created from the torque which act to cause ribs 37 to fail and fracture. Where score line 36 is provided substantially about the entire periphery of closure 10 and all of ribs 37 fracture, pilfer band 34 is effectively detachably connected to cap 14 of the closure, and thus fracturing of the weakened skirt area indicates partial or complete removal of the closure from container 12. Additionally, the detachable connection causes pilfer band 34 to be completely severed from cap 14 and to remain on container 12 after cap 14 is removed therefrom.

As shown in Figure 2, pilfer band 34 may be provided with a vertical score 54 or other suitable area of reduced strength. The inclusion of vertical score 54 accommodates the severance of pilfer band 34 after it has been partially or completely detached from cap 14. Preferably, score 54 extends substantially through pilfer band 34. Since it is sometimes desirable to accommodate removal of pilfer band 34 from container 12 together with cap 14, a non-scored integral connector portion 56 defined by score line 36, preferably of relatively greater strength than one of ribs 37, joins pilfer band 34 and cap 14 so that pilfer band 34, is severable and removable from the container with the closure after the pilfer band separates or fractures along vertical score 54, as shown in Figure 8.

Where removal of pilfer band 34 with cap 14 is desired, an integral connector portion may also be provided by having score line 36 extend substantially about the entire closure, with the depth of the score varied. In this way, a majority of ribs 37 may be simultaneously partially cut when score 36 is made, with one or more ribs 37 being non-scored so that they exhibit relatively greater strength then the other ribs 37 and do not fracture during removal of the closure, thus connecting pilfer band 34 to cap 14 for removal therewith from the container.

While the above-described arrangement of ribs 37 and score line 36 provides the desired fracturable area distinguishing pilfer band 34 and skirt portion 18 and is presently preferred, other scoring arrangements could be provided.

As best shown in Figure 3, pilfer band 34 includes a generally vertical, circumferentially extending annular band portion 38. Pilfer band 34 further includes an annular shoulder portion 40 which is integral with and extends inwardly of annular band portion 38.

In order to provide for mechanically locking interaction between pilfer band 34 and container neck 24, pilfer band 34 includes a plurality of relatively thin, flexible, integral wings or fingers 42. Each wing 42 comprises a tongue-like projection preferably having a generally triangular configuration, the wings 42 being spaced circumferentially about the closure 10. It will be understood, however, that the exact configuration of each wing 42 is a matter of design choice in accordance with the principles disclosed herein, and could thus be other than generally triangular.

While each of the wings 42 is generally triangular, they are not actually true triangles and include a plurality of distinct edge portions. An edge portion 44 of each wing 42 is integral with annular band portion 38 of the pilfer band. An edge portion 46 of each wing is integral with annular shoulder portion 40.

Significantly, edge portion 44 is preferably disposed at an angle alpha with respect to the vertical and the rotational axis of closure 10 (See Figure 3). As will be further described, this angle is significant in that it accommodates application of closure 10 to container 12 without interference from wings 42. Additionally, angle alpha accommodates removal of closure 10 from the portion of the mold in which it is formed which forms the wings 42, relative rotation of this mold portion and the closure facilitating removal. Angle alpha is preferably in the range of approximately 20-60 degrees, with 30 degrees being shown in Figure 3. It will be appreciated, however, that angle alpha could be zero, i.e., wings 42 would be vertically oriented, for a closure in accordance with the principles herein as will be described.

Each wing 42 further includes a first camming edge portion 48 which is adapted to engage and cam against the lower surface of locking ring 26 during removal of closure 10. Preferably, camming edge portion 48 is complemental to the lower surface of locking ring 26 which it is adapted to engage.

The mechanical locking action of each wing 42 is further provided by a second locking free edge portion 50. Locking edge portion 50 defines the free end portion of wing 42 which is adapted to lockingly engage and interfere with the portion of container neck 24 disposed adjacent and below locking ring 26. Each wing 42 is further provided with an edge portion 52 extending between edge portion 50 and annular band portion 38. This edge portion 52 is preferably disposed at an angle from the horizontal, as shown, so that camming or flexing of the wings away from the container neck during application of the closure is facilitated.

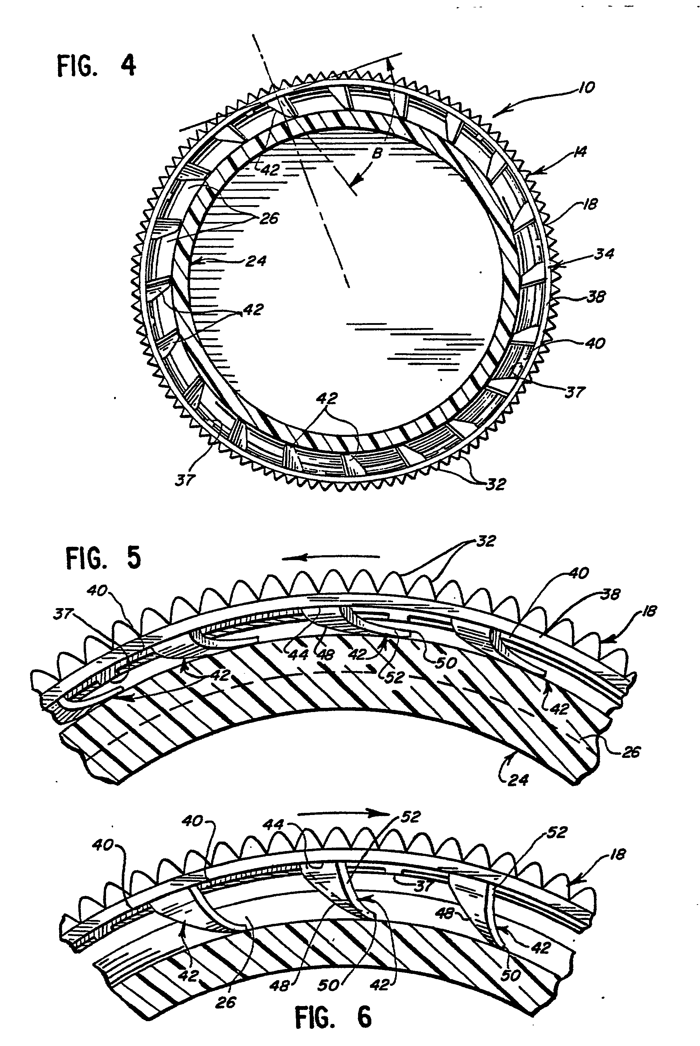

As indicated by angle beta in Figure 4, each wing 42 of the present embodiment preferably extends angularly inwardly of band portion 38 of pilfer band 34. Angle beta is shown measured between a line defined by the intersection of the generally planar surface of each wing and a horizontal plane, and a line tangent to the closure at the intersection of the first line with annular band portion 38. Angle beta is preferably approximately 75 degrees. As further discussed, the significance of this angular disposition is two-fold. First, during application of closure 10 to container 12, angle beta disposes each wing 42 so that it extends away from the direction of rotation during application, thus accommodating flexing of each wing 42 toward annular band portion 38 as the wings are moved by external threads 22 and locking ring 26. Further, this angle accommodates the dimensioning of wings 42 so that their length is sufficient to interengage and firmly abut and tend to lock against the portion of container neck 24 disposed adjacent and below locking ring 26.

It should be noted that during fabrication of the closure in accordance with the present invention, removal of the plunger portion of the mold which forms threads 20 may deform the wings from the orientation in which they are molded. Since removal may result in this undesired deformation, particularly an increasing angle beta shown in Figure 4, it may be necessary to reorient the wings, such as by manipulation by a suitable implement moved across their surfaces. Experience has shown that the resilience or memory of the wings accommodates exertion of nominal pressure on the wings in order to correctly reorient them. Additionally, variation of the closure and mold temperatures affects the severity of the deformation, and they may thus be adjusted to minimize the problem.

With particular reference to Figures 3, 4 and 5, the action of pilfer band 34 during application of closure 10 to container 12 will be described. Closure 10 is placed on container neck 24 and moved downwardly thereof. This operation is preferably performed by rotating closure 10 with respect to container 12 so that the internal threads 20 of skirt portion 18 engage and mesh with external threads 22 on container neck 24.

As the closure is moved downwardly of the container, wings 42 of pilfer band 34 are moved into engagement with the upper surface of locking ring 26. Significantly, the angular disposition of each of wings 42 from the vertical (indicated by angle alpha) results in edge portion 52 of each wing 42 engaging the surface of locking ring 26 so that each wing 42 is flexed and urged outwardly of closure 10 away from container 12. This action is clearly illustrated in Figure 5 where each of wings 42 is shown flexed outwardly of closure 10, with their surfaces each engaging the outer surface of locking ring 26 (the arrow in Figure 5 indicates the direction of rotation of closure 10 with respect to container neck 24 during application in this fashion). Notably, annular shoulder portion 40 is preferably dimensioned such that it extends inwardly of annular band portion 38 a distance at least equal to the thickness of each wing 42. In this way, additional clearance is provided between band portion 38 and locking ring 26 so that wings 42 may flex to an out-of-the-way position as closure 10 is applied to container 12.

As closure 10 is further applied to container 12 and liner 28 is brought into sealing engagement with the mouth of the container, each of wings 42 moves past locking ring 26 until each wing is disposed adjacent to and below the locking ring. After the wings have moved past the locking ring, they generally resume their original disposition due to their resilient nature or memory, and again extend at an angle from band portion 38. This condition is illustrated in Figures 1 and 4, in which camming edge portion 48 of each wing 42 is shown in engagement with the lower surface of locking ring 26.

Significantly, in this embodiment of the present invention locking edge portion 50 of each wing 42 is disposed such that it engages the portion of container neck 24 disposed adjacent to and below locking ring 26. In this arrangement, internal threads 20 and external threads 22 firmly maintain closure 10 in position on container neck 24, facilitating sealing engagement of liner 28 with the mouth of the container.

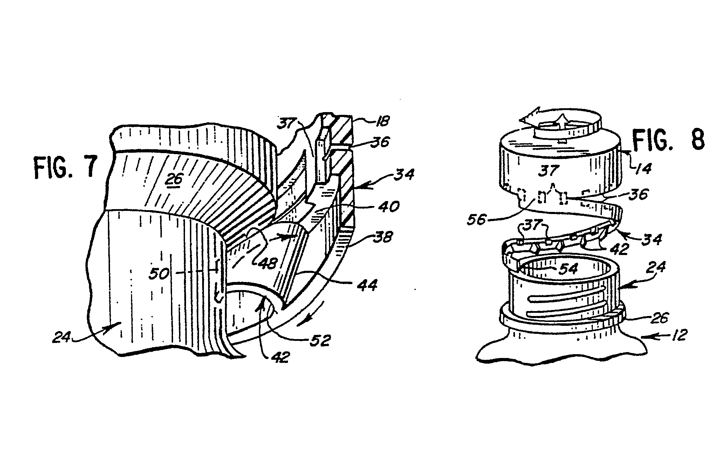

With particular reference to Figures 6 and 7, the action of wings 42 of pilfer band 34 during removal of closure 10 from container 12 will be described. The arrows in these figures indicate the direction of rotation of closure 10 with respect to container 12 during removal of the closure from the container.

As closure 10 is rotated such as by manual torsion, the action of internal threads 20 and external threads 22 creates an axial force within closure 10 which acts in addition to the torque applied to the closure. As this axial force increases, camming edge portion 48 of each wing 42 is urged into engagment with the surface of locking ring 26. As this occurs, each wing 42 is subjected to forces which act to urge the wing to fold or bend generally along edge portion 44 integral with annular band portion 38, as shown by the phantom arrow in Figures 3 and 7. In other words, each wing 42 attempts to increase angle beta by "bending backwards" or collapsing as closure 10 is rotated and the wings are urged into engagement with locking ring 26.

So that pilfer band 34 creates a resistance to the torque introduced by rotation of closure 10 for removal, it is necessary that each wing 42 resists bending backwards or collapsing as camming edge portion 48 is urged and cams against locking ring 26. This result is achieved by the dimensioning of wings 42. Specifically, the length of each wing 42 is such that each extends a distance from band portion 38 greater than the distance between the band portion and container neck 24. Thus, the free end portion of each wing, defined by locking edge portion 50, is urged into interfering, firmly abutting locking engagement or contact with the portion of container neck 24 disposed below and adjacent to locking ring 26.

Additionally, each wing 42, although flexible, has sufficient resiliency and thickness to effectively prevent locking edge portion 50 from collapsing and "moving past" container neck 24 as the wings are urged about edge portion 44 by camming edge portion 42 engaging locking ring 26. Thus, a resistance to the torque of rotation of closure 10 is created in pilfer band 34 as wings 42 resist the camming interaction of the wings with locking ring 26, since the lack of clearance between the band portion 38 and locking ring 26 causes the wings to effectively interfere and mechanically lock with container neck 24 so as to prevent the wings from collapsing or bending backwards.

As the resistance to the rotation of closure 10 increases, a point is reached where the resistance is greater than the torque carrying strength of the fracturable skirt portion including frangible ribs 37. When this occurs, ribs 37 between pilfer band 34 and cap 14 fracture or fail resulting in detachment of pilfer band 34 from cap 14. Thus, pilfer band 34 clearly indicates that removal of closure 10 has been attempted.

As noted above, pilfer band 34 may be provided with an area of reduced strength such as vertical score 54. Connector portion 56 thus accommodates removal of pilfer band 34 from container 12 together with cap 14 by exerting a tensile force on pilfer band 34 causing it to sever at score 54 so that it is removed from container 12 together with the remainder of closure 10. This is clearly illustrated in Figure 8 where pilfer band 34 is shown "pig-tailed" and being removed from container 12 with cap 14, the cap and the pilfer band being joined by connector portion 56 after ribs 37 and band portion 38 at score 54 have fractured.

Of fundamental importance with regard to the design of the present plastic closure is the relationship of the exact dimensions of wings 42 and the strength of the fracturable skirt portion. Specifically, it is necessary that the resistance to removal by pilfer band 34 created by wings 42 be greater than the force required to fracture the weakened portion of the closure. Otherwise, of course, pilfer band 34 would not perform its intended function since the wings would collapse or otherwise deform without the closure fracturing as intended. Naturally, the weakened skirt portion of the closure must be sufficiently strong so that it remains intact during application of the closure to the container. Additionally, the wings preferably exhibit sufficient flexibility to accommodate movement outwardly of the closure away from the container during application to the container, yet have sufficient resilience or memory to generally resume their original disposition after moving past the locking ring or other portion of the container neck with which they are designed to interact.

Thus, if the force required for causing the ribs 37 to fail is relatively high, the number and resilience (a function of dimension and strength of material) of the wings 42 must be correspondingly increased. Conversely, if ribs 37 are provided such that a relatively small force is required for separating pilfer band 34 from the remainder of closure 10, the number of wings 42 and their individual stiffness may be decreased. Thus, the number of wings illustrated in the present embodiment (approximately 20) may be increased or decreased depending upon relative strength of the weakened skirt portion of the closure 10. In view of this, it is particularly desirable to reduce the number and thickness of wings 42 to the minimum required to provide sufficient resistance to rotation for removal of closure 10, since economy of materials is of importance in economically producing plastic closures in high volume.

## Claims

1. A plastics closure for a container whereof the neck is formed with a screw-thread and a locking ring below the screw-thread, comprising a top wall, a cylindrical skirt depending from said top wall and having on its radially inner surface a screw-thread for engagement with said screw-thread on the neck of the container, and a pilfer band attached to and depending from said skirt by a plurality of circumferentially-spaced frangible bridges, a circumferential line of weakening defining the boundary between the skirt and the pilfer band, characterized in that a plurality of ribs (37) projecting radially inwardly from the internal surfaces of the skirt and the pilfer band extend axially between the internal surfaces of the skirt and the pilfer band and in that a score line (36) defines the boundary between the pilfer band (34) and the skirt (18) and extends circumferentially past the ribs (37) whereby the score line constitutes the line of weakening and said ribs constitute the frangible bridges.

2. A plastics closure as claimed in claim 1, characterized by a connector portion (56) which operates to retain a connection between the skirt and the pilfer band after the frangible bridges are fractured and which is not traversed by said score line (36).

3. A plastics closure as claimed in claim 2, characterized in that an axial line of weakening (54) extends across the pilfer band at one circumferential end of the connector portion.

4. A method of making a closure comprising moulding from a plastics material a closure having a top wall, a cylindrical skirt which depends from said top wall and which has a screw-thread on its internal surface, a pilfer band depending from said skirt and connected thereto by a plurality of circumferentially-spaced frangible bridges, and a circumferential line of weakening defining the boundary between the skirt and the pilfer band, characterized by forming in the moulding of the closure a plurality of circumferentially-spaced ribs (37) projecting radially inwardly from the internal surfaces of the skirt and the pilfer band extending axially between the internal surfaces of the skirt (18) and pilfer band (34), and subsequently scoring a circumferential line (36) between the skirt and the pilfer band from the radially outer side of the closure which score line extends circumferentially past the ribs whereby the score line (36) constitutes the circumferential line of weakening and the ribs (37) constitute the frangible bridges.

5. A method as claimed in claim 4, wherein a connector portion (56) is provided between the skirt and the pilfer band, characterized in that the score line extends continuously from one circumferential end of the connector portion (56) to the other without traversing the connector portion.

## Patentansprüche

1. Kunststoffverschluß für einen Behälter, an dessen Hals ein Schraubgewinde und ein Sperring unter dem Schraubgewinde angeformt ist, bestehend aus einer Kopfwand, einem zylindrischen Mantel, der von der Kopfwand herabhängt und an seiner radial inneren Seite ein Schraubgewinde zum Eingriff in das Schraubgewinde an dem Behälterhals aufweist, wobei ein Sicherheitsband an dem Mantel mittels einer Mehrzahl von in Umfangsabständen angeordneten zerbrechlichen Brücken angebracht ist und mittels dieser von dem Mantel herabhängt, eine sich über den Umfang erstreckende Schwächungslinie, die die Begrenzung zwischen dem Mantel und dem Sicherheitsband bildet, dadurch gekennzeichnet, daß eine Mehrzahl von Rippen (37) von der Innenseite des Mantels radial nach innen vorsteht und das Sicherheitsband sich axial zwischen der Innenseite des Mantels und dem Sicherheitsband erstreckt und daß eine Kerblinie (36) die Begrenzung zwischen dem Sicherheitsband (34) und dem Mantel (18) bildet und sich in Umfangsrichtung vorbei an den Rippen (37) erstreckt, wodurch die Kerblinie die Schwächungslinie und die Rippen die zerbrechlichen Brücken bilden.

2. Kunststoffverschluß nach Anspruch 1, gekennzeichnet durch ein Verbindungsteil (56), das wirksam ist, um eine Verbindung zwischen dem Mantel und dem Sicherheitsband zu erhalten, nachdem die zerbrechlichen Brücken zerbrochen sind, und das nicht von der Kerblinie (36) überquert wird.

3. Kunststoffverschluß nach Anspruch 2, dadurch gekennzeichnet, daß eine axiale Schwächungslinie (54) sich quer über das Sicherheitsband an einem Umfangsende des Verbindungsteils erstreckt.

4. Verfahren zum Herstellen eines Verschlusses, umfassend das Formen eines Verschlusses aus Kunststoffmaterial mit einer Kopfwand, einem zylindrischen Mantel, der von der Kopfwand herabhängt und der an seiner Innenseite ein Schraubgewinde aufweist, wobei ein Sicherheitsband von dem Mantel herabhängt und mit diesem durch eine Mehrzahl von in Umfangsabständen angeordneten zerbrechlichen Brücken verbunden ist, und eine sich über den Umfang erstreckende Schwächungslinie die Begrenzung zwischen dem Mantel und dem Sicherheitsband bildet, dadurch gekennzeichnet, daß beim Formen des Verschlusses eine Mehrzahl von in Umfangsabständen angeordneten Rippen (37) gebildet werden, die von der Innenseite des Mantels radial nach innen vorstehen und das Sicherheitsband sich axial zwischen der Innenseite des Mantels (18) und dem Sicherheitsband (34) erstreckt, sowie anschließend eine Umfangslinie (36) zwischen dem Mantel und dem Sicherheitsband von der radial äußeren Seite des Verschlusses her gekerbt wird, wobei die Kerblinie sich in Umfangsrichtung an den Rippen vorbei erstreckt, wodurch die Kerblinie (36) die sich über den Umfang erstreckende Schwächungslinie bildet und die Rippen (37) die zerbrechlichen Brücken bilden.

5. Verfahren nach Anspruch 4, bei dem ein Verbindungsteil (56) zwischen dem Mantel und dem Sicherheitsband vorgesehen ist, dadurch gekennzeichnet, daß die Kerblinie sich kontinuierlich von einem Umfangsende des Verbindungsteils (56) zu dem anderen ohne Überquerung des Verbindungsteils erstreckt.

## Revendications

1. Dispositif de fermeture en matière plastique pour un récipient, dont le goulot comporte un filetage et une bague de verrouillage située au-dessous du filetage, et comprenant une paroi supérieure, une jupe cylindrique s'étendant vers le bas à partir de ladite paroi supérieure et comportant, sur sa surface, intérieure du point de vue radial, un filetage destiné à engrener avec ledit filetage situé sur le goulot du récipient, et une bande d'inviolabilité fixée à ladite jupe et s'étendant vers le bas à partir de cette dernière par l'intermédiaire d'une pluralité de pattes pouvant être rompues, qui sont espacées circonférentiellement, une ligne circonférentielle d'affaiblissement définissant la limite entre la jupe et la bande d'inviolabilité, caractérisé en ce qu'une pluralité de nervures (37), qui font saillie radialement vers l'intérieur à partir des surfaces intérieures de la jupe et de la bande d'inviolabilité, s'étendent axialement entre les surfaces intérieures de la jupe et la bande d'inviolabilité, et en ce qu'une ligne de déchirement (36) définit la limite entre la bande d'inviolabilité (34) et la jupe (18) et s'étend circonférentiellement entre les nervures (37), de sorte que la ligne de déchirement constitue la ligne d'affaiblissement et que lesdites nervures constituent les pattes pouvant être rompues.

2. Dispositif de fermeture en matière plastique selon la revendication 1, caractérisé par une partie de liaison (56), qui agit de manière à maintenir une liaison entre la jupe et la bande d'inviolabilité après rupture des pattes pouvant être rompues et n'est pas traversée par ladite ligne de déchirement (36).

3. Dispositif de fermeture en matière plastique selon la revendication 2, caractérisé en ce qu'une ligne axiale d'affaiblissement (54) s'étend en travers de la bande de déchirement, au niveau d'une extrémité circonférentielle de la partie de liaison.

4. Procédé pour fabriquer un dispositif de fermeture, consistant à mouler, à partir d'une matière plastique, un dispositif de fermeture comportant une paroi supérieure, une jupe cylindrique qui s'étend vers le bas à partir de ladite paroi supérieure et possède un filetage sur sa surface intérieure, une bande d'inviolabilité qui s'étend vers le bas à partir de ladite jupe et est raccordée à cette dernière par une pluralité de pattes pouvant être rompues, qui sont espacées circonférentiellement, et une ligne circonférentielle d'affaiblissement définissant la limit entre la jupe et la bande d'inviolabilité, caractérisé par la formation, lors du moulage du dispositif de fermeture, d'une pluralité de nervures (37) espacées circonférentiellement, qui font saillie radialement vers l'intérieur à partir des surfaces intérieures de la jupe, alors que la bande d'inviolabilité s'étend axialement entre les surfaces intérieures de la jupe (18) et de la bande d'inviolabilité (34), et un déchirement ultérieur le long d'une ligne circonférentielle (36) entre la jupe et la bande d'inviolabilité à partir du côté, extérieur du point de vue radial, du dispositif de fermeture, laquelle ligne de déchirement s'étend circonférentiellement entre les nervures, ce qui a pour effet que la ligne de déchirement (36) constitue la ligne circonférentielle d'affaiblissement et les nervures (37) constituent les pattes pouvant être rompues.

5. Procédé selon la revendication 4, selon lequel une partie de liaison (56) est prévue entre la jupe et la bande d'inviolabilité, caractérisé en ce que la ligne d'arrachement s'étend continûment depuis une extrémité circonférentielle de la partie de liaison (56) jusqu'à l'autre extrémité sans traverser la partie de liaison.

FIG. 1

FIG. 2

FIG. 3

FIG. 4

FIG. 5

FIG. 6

FIG. 7

FIG. 8